# EUROPÄISCHE PATENTSCHRIFT

(11) **EP 4 461 487 B1**
(45) Veröffentlichungstag und Bekanntmachung des Hinweises auf die Patenterteilung: **18.02.2026**
(21) Anmeldenummer: 24174861.5
(22) Anmeldetag: 08.05.2024
(51) Int. Cl.: B27D 5/00

(54) **VORRICHTUNG UND VERFAHREN ZUM BESCHICHTEN EINES WERKSTÜCKS**
DEVICE AND METHOD FOR COATING A WORKPIECE
DISPOSITIF ET PROCÉDÉ DE REVÊTEMENT D'UNE PIÈCE

(30) Priorität: 10.05.2023 DE 102023112270
(43) Veröffentlichungstag der Anmeldung: 13.11.2024
(73) Patentinhaber: HOMAG GmbH, 72296 Schopfloch (DE)
(72) Erfinder: Weimer, Lars, 72226 Simmersfeld (DE); Würz, Jonathan, 72290 Loßburg (DE); Killinger, Evelyn, 72250 Wittlensweiler (DE)
(74) Vertreter: Hoffmann Eitle

(56) Entgegenhaltungen:
- EP-A1- 4 124 431
- DE-A1- 102017 205 208
- DE-A1- 102021 117 813

## Beschreibung

### Technisches Gebiet

Die Erfindung betrifft eine Vorrichtung zum Beschichten eines Werkstücks, das bevorzugt zumindest abschnittweise aus Holz, Holzwerkstoff, Kunststoff oder dergleichen besteht, nach dem Oberbegriff von Patentanspruch 1, sowie ein Verfahren zum Beschichten eines Werkstücks.

### Stand der Technik

Im Bereich der Möbel- und Bauelementeindustrie werden Werkstücke, die beispielsweise aus Holz, Holzwerkstoffen oder Kunststoff oder dergleichen bestehen, häufig mit einem Beschichtungsmaterial versehen, insbesondere im Bereich der Schmalfläche. Neben anderen Fügetechniken kommt dabei oft ein Haftmittel zum Einsatz, das beispielsweise mittels einer Leimauftragswalze auf die zu beschichtende Oberfläche des Werkstücks oder eine Fügefläche des Beschichtungsmaterials aufgetragen wird. Ein typisches Haftmittel ist dabei Hotmelt, der aufgeschmolzen und dann aufgetragen wird.

Diese Fügetechnologie hat sich seit Jahrzehnten bewährt. Dabei sind die Anforderungen an die Fügeverbindung in den letzten Jahren immer weiter angestiegen. Die Qualität der Fügeverbindung wird dabei unter anderem durch die Festigkeit (z.B. Schälwiderstand), Dauerhaftigkeit und Dichtheit (etwa gegenüber Feuchtigkeit), aber auch die Optik der Fügeverbindung bestimmt. Hier besteht nach wie vor Verbesserungspotenzial.

Darüber hinaus hat sich gezeigt, dass der Fügeprozess auch durch vielfältige Umgebungsbedingungen beeinflusst wird, wodurch die Reproduzierbarkeit des Beschichtungsvorgangs reduziert und die Notwendigkeit eines Benutzereingriffs erhöht wird.

Ferner offenbart die EP 4 124 431 A1 eine Beschichtungsvorrichtung sowie ein Verfahren zum Betrieb einer Beschichtungsvorrichtung. Die Beschichtungsvorrichtung umfasst einen ersten Energiezufuhrabschnitt und einen zweiten Energiezufuhrabschnitt, die so angeordnet sind, dass der erste Energiezufuhrabschnitt und der zweite Energiezufuhrabschnitt auf ein Beschichtungsmaterial einwirken können. Ferner umfasst die Beschichtungsvorrichtung eine Abschirmeinrichtung, die in eine erste Position bewegbar ist, in der die Abschirmeinrichtung den zweiten Energiezufuhrabschnitt zumindest teilweise abschirmt.

### Darstellung der Erfindung

Der Erfindung liegt die Aufgabe zugrunde, eine Vorrichtung zum Beschichten eines Werkstücks der eingangs genannten Art bereitzustellen, die eine hohe Qualität der Fügeverbindung bei hoher Reproduzierbarkeit zu ermöglichen.

Diese Aufgabe wird durch eine Vorrichtung zum Beschichten eines Werkstücks nach Anspruch 1 sowie ein Verfahren zum Beschichten eines Werkstücks nach Anspruch 11 gelöst. Besonders bevorzugte Weiterbildungen der Erfindung sind in den abhängigen Ansprüchen angegeben.

Der Erfindung liegt die Erkenntnis zugrunde, dass die Qualität und Reproduzierbarkeit der Fügeverbindung maßgeblich durch eine präzise Einstellung der Eigenschaften des Haftmittels wie insbesondere Temperatur, Druck, Schichtdicke und Flächigkeit beeinflusst wird. Vor diesem Hintergrund ist erfindungsgemäß vorgesehen, dass bei einer Beschichtungsvorrichtung der eingangs genannten Art eine Erfassungseinheit zum Erfassen mindestens einer Eigenschaft des aufgetragenen Haftmittels und eine Reaktivierungseinheit zum zumindest teilweisen Reaktivieren des aufgetragenen Haftmittels vorgesehen sind. Dabei ist die Erfassungseinheit eingerichtet, die mindestens eine Eigenschaft des aufgetragenen Haftmittels in einem Bereich zwischen der Haftmittelauftragseinheit und der Reaktivierungseinheit zu erfassen.

Auf diese Weise kann sowohl die Qualität der Fügeverbindung als auch die Reproduzierbarkeit des Fügevorgangs deutlich gesteigert werden. Insbesondere können eine oder mehrere Eigenschaften des Haftmittels, das in dieser Hinsicht maßgeblich ist, mittels der ersten Erfassungseinheit präzise erfasst werden. Auf dieser Grundlage kann der Fügeprozess präziser als bisher gesteuert werden. Dabei ermöglicht die Reaktivierungseinheit eine besonders präzise Einstellung des Aktivierungsgrades des Haftmittels, was einerseits zu einer besonders hochwertigen Fügeverbindung führt, andererseits aber auch die Reproduzierbarkeit steigert. Um dies zu erreichen, ist die Reaktivierungseinheit gewissermaßen stromabwärts der ersten Erfassungseinheit angeordnet und kann so unmittelbar auf mögliche Schwankungen einer oder mehrerer Eigenschaften des Haftmittels reagieren.

Nicht zuletzt werden durch die erfindungsgemäße Ausgestaltung auch die Anforderungen an die Bedienperson verringert, und der Beschichtungsvorgang erweist sich auch bei wechselnden Umgebungsbedingungen als stabil und reproduzierbar. Nicht zuletzt trägt die Erfindung auch dazu bei, den Ausschuss von Werkstücken zu reduzieren.

Gemäß einer Weiterbildung der Erfindung ist vorgesehen, dass die erste Erfassungseinheit eingerichtet ist, die Temperatur und/oder Schichtdicke des aufgetragenen Haftmittels zu erfassen. Diese Parameter haben sich als besonders entscheidend für die Qualität und Reproduzierbarkeit der Fügeverbindung erwiesen.

Darüber hinaus ist gemäß einer Weiterbildung der Erfindung vorgesehen, dass die Erfassungseinheit eingerichtet ist, die mindestens eine Eigenschaft des aufgetragenen Haftmittels flächig, insbesondere vollflächig zu erfassen. Auf diese Weise kann sichergestellt werden, dass das Haftmittel auch tatsächlich an allen bzw. allen gewünschten Stellen der zu beschichtenden Oberfläche und/oder das zu fügenden Beschichtungsmaterials vorhanden ist, was für die Qualität und Reproduzierbarkeit der Fügeverbindung ebenfalls von entscheidender Bedeutung ist. Als besonders effektiv hat sich zu diesem Zweck der Einsatz einer Kamera erwiesen.

Darüber hinaus ist gemäß einer Weiterbildung der Erfindung vorgesehen, dass die Vorrichtung eine zweite Erfassungseinheit zum Erfassen mindestens einer Eigenschaft, insbesondere Temperatur des aufgetragenen Haftmittels aufweist. Der Einsatz einer zweiten Erfassungseinheit ermöglicht zunächst eine weiter gesteigerte Präzision bei der Erreichung der gewünschten Eigenschaften des Haftmittels. Darüber hinaus lassen sich auf diese Weise auch unterschiedliche Erfassungseinheiten kombinieren, die für den jeweiligen Einsatzzweck maßgeschneidert sein können. So kann die zweite Erfassungseinheit beispielsweise primär zur abschließenden Absicherung des zuvor schon mittels der ersten Erfassungseinheit optimierten Beschichtungsvorganges dienen. Hierdurch wird ermöglicht, dass die zweite Erfassungseinheit deutlich kompakter ausgeführt werden kann als die erste Erfassungseinheit. Dies wiederum eröffnet die Möglichkeit, die zweite Erfassungseinheit praktisch beliebig zu positionieren, und zwar insbesondere derart, dass mindestens eine Eigenschaft des aufgetragenen Haftmittels unmittelbar vor dem Andrücken des Beschichtungsmaterials an das Werkstück erfolgen kann. Dies ist genau die Stelle und der Zeitpunkt, in welchem eine oder mehrere der gewünschten Eigenschaften des aufgetragenen Haftmittels präzise vorliegen sollten, um ein optimales Beschichtungsergebnis zu erzielen. Der Einsatz einer zweiten Erfassungseinheit leistet einen wesentlichen Beitrag hierfür.

Die vorstehenden Effekte der zweiten Erfassungseinheit lassen sich besonders wirksam erzielen, wenn die zweite Erfassungseinheit gemäß einer Weiterbildung der Erfindung, die mindestens eine Eigenschaft des aufgetragenen Haftmittels in einem Bereich zwischen der Reaktivierungseinheit und der Andrückeinheit erfasst. Hierdurch lässt sich nicht nur die Wirkung der Reaktivierungseinheit überprüfen und gegebenenfalls steuern, sondern es kann - wie vorstehend erwähnt - die mindestens eine Eigenschaft des aufgetragenen Haftmittels möglichst nah am Fügepunkt (in welchem das Beschichtungsmaterial an das Werkstück angedrückt wird) überprüft und gesteuert werden.

Zur Erreichung dieser Vorteile hat es sich als ausreichend erwiesen, dass gemäß einer Weiterbildung der Erfindung, die mindestens eine Eigenschaft mittels der zweiten Erfassungseinheit punkt- bzw. linienförmig erfasst wird. Auf diese Weise lassen sich besonders einfache Bauteile für die zweite Erfassungseinheit einsetzen, wie etwa ein Pyrometer. Das Erfassungsergebnis ist dennoch aussagekräftig, da andere Eigenschaften des aufgetragenen Haftmittels - wie etwa die Flächigkeit und Schichtdicke - bereits vorgelagert mittels der ersten Erfassungseinheit erfasst werden können.

Darüber hinaus ist gemäß einer Weiterbildung der Erfindung vorgesehen, dass die Vorrichtung eine Steuereinheit zum Steuern mindestens einer Einheit aufweist, die ausgewählt ist aus Haftmittelauftragseinheit, Reaktivierungseinheit und Fördereinheit. Auf diese Weise kann präzise und ohne (notwendigen) Benutzereingriff sichergestellt werden, dass eine hohe Qualität der Fügeverbindung bei hoher Reproduzierbarkeit erreicht wird. Dabei hat es sich als besonders vorteilhaft erwiesen, dass die Steuereinheit eingerichtet ist, ein Erfassungsergebnis der ersten und/oder zweiten Erfassungseinheit zu erhalten und auf dieser Grundlage zumindest eine der Einheiten zu steuern.

Neben diesen Steuerungsaufgaben kann die Steuereinheit jedoch gemäß einer Weiterbildung der Erfindung auch noch weitere Aufgaben übernehmen. Insbesondere kann die Steuereinheit eingerichtet sein, ein Erfassungsergebnis der ersten und/oder zweiten Erfassungseinheit zu erhalten und auf dieser Grundlage eine Information auszugeben, insbesondere an eine Bedienperson und/oder eine Datenbank. Durch eine solche Informationsausgabe können frühzeitig erforderliche Maßnahmen zur Aufrechterhaltung der Fügequalität und Reproduzierbarkeit eingeleitet werden, wie etwa eine Wartung oder Reparatur initiiert und vorbereitet werden. Auch können die ausgegebenen Informationen dazu dienen, bei bestimmten Erfassungsergebnissen auch Werkzeuge als Ausschuss auszuschleusen. Ferner können die Ergebnisse einer oder mehrerer Vorrichtungen in einer Datenbank ausgewertet und als Grundlage zur weiteren Optimierung des Beschichtungsvorganges herangezogen werden.

Die Reaktivierungseinheit kann im Rahmen der Erfindung auf unterschiedliche Art und Weise ausgestaltet sein. Im Hinblick auf eine ebenso wirksame wie schonende und gleichmäßige Reaktivierung des aufgetragenen Haftmittels ist es jedoch bevorzugt, dass die Energiequelle ausgewählt ist aus Infrarotquelle, Laserquelle, Mikrowellenquelle, Heißgasquelle oder Kombinationen daraus.

Ein Verfahren zum Beschichten eines Werkstücks ist in Patentanspruch 11 definiert. Dieses zeichnet sich dadurch aus, dass die mindestens eine erfasste Eigenschaft jeweils mit einem Soll-Wert verglichen wird und auf dieser Grundlage geeignete Maßnahmen getroffen werden. Falls die mindestens eine erfasste Eigenschaft um mehr als einen vorbestimmten Wert von dem jeweiligen Soll-Wert abweicht, wird das aufgetragene Haftmittel entsprechend reaktiviert. Alternativ oder zusätzlich kann in diesem Falle auch bereits beim Auftragen des Haftmittels eine entsprechende Anpassung der Eigenschaften bewirkt werden, etwa indem die Temperatur und/oder Schichtdicke des aufzutragenden Haftmittels entsprechend erhöht oder auch reduziert wird.

Innerhalb dieses Konzepts kann gemäß einer Weiterbildung der Erfindung auch ein Soll-Ist-Vergleich mit einem zweiten vorbestimmten Wert stattfinden. D.h., falls die mindestens eine erfasste Eigenschaft um mehr als einen zweiten vorbestimmten Wert von dem jeweiligen Soll-Wert abweicht, wird das entsprechende Werkstück als Ausschuss identifiziert und ausgeschleust. Alternativ oder zusätzlich kann die Abweichung um mehr als den zweiten vorbestimmten Wert auch als Trigger dienen, dass bestimmte Informationen (typischerweise die erste und/oder zweite erfasste Eigenschaft) ausgegeben wird, insbesondere an eine Bedienperson und/oder eine Datenbank. Hierdurch lassen sich die bereits vorstehend beschriebenen Vorteile besonders wirksam und ohne notwendigen Benutzereingriff erzielen.

### Kurze Beschreibung der Zeichnungen

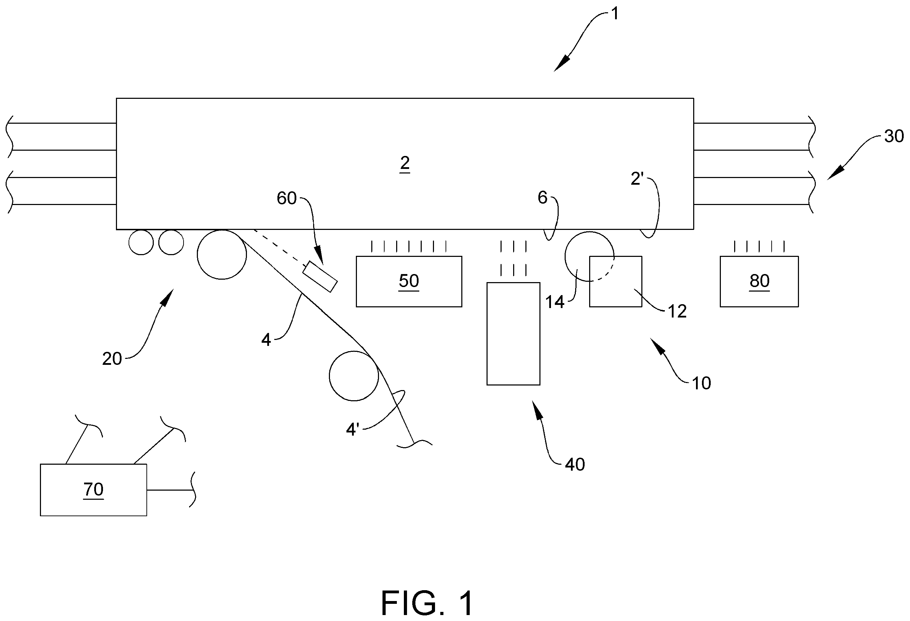

Fig. 1 zeigt schematisch eine Draufsicht einer Vorrichtung zum Beschichten eines Werkstücks gemäß einer Ausführungsform der Erfindung.

### Ausführliche Beschreibung bevorzugter Ausführungsformen

Ausführungsformen der Erfindung werden nachfolgend ausführlich unter Bezugnahme auf die begleitenden Zeichnungen beschrieben.

Eine Vorrichtung 1 zum Beschichten eines Werkstücks 2 ist in Fig. 1 schematisch in einer Draufsicht gezeigt. Die Vorrichtung 1 dient zum Beschichten von Werkstücken, die beispielsweise aus Holz, Holzwerkstoff, Kunststoff oder verschiedenen Verbundmaterialien bestehen, wie sie im Bereich der Möbel- und Bauelementeindustrie verbreitet zum Einsatz kommen.

Das Werkstück 2 soll mit einem Beschichtungsmaterial 4 beschichtet werden, das beispielsweise bahn- oder streifenförmig ausgestaltet sein kann. In der vorliegenden Ausführungsform soll das Beschichtungsmaterial 4 auf eine Schmalfläche 2' des Werkstücks aufgebracht werden, obgleich alternativ oder zusätzlich auch eine Beschichtung einer Breitfläche oder anderer Werkstückoberflächen erfolgen kann. Das Beschichtungsmaterial kann beispielsweise aus Kunststoff, Furnier, Aluminium, Papier und vielfältigen anderen Materialien und Materialkombinationen bestehen.

Wie in Fig. 1 zu erkennen ist, umfasst die Vorrichtung 1 zunächst eine Haftmittelauftragseinheit 10 zum Auftragen eines Haftmittels 6 auf die zu beschichtende Oberfläche 2' des Werkstücks 2. Obgleich in Fig. 1 nicht gezeigt, kann alternativ oder zusätzlich Haftmittel auf eine dem Werkstück 2 zugewandte Fügefläche 4' des Beschichtungsmaterials 4 aufgebracht werden. Bei dem Haftmittel kann es sich beispielsweise um Schmelzkleber, beispielsweise Hotmelt handeln. Zum Aufschmelzen des Haftmittels weist die Haftmittelauftragseinheit 10 eine Aufschmelzeinheit auf, die ein beispielsweise als Granulat vorliegendes Haftmittel aufschmilzt und einer Auftragswalze 14 zuführt, welche das aufgeschmolzene Haftmittel 6 auf die Schmalfläche 2' des Werkstücks aufträgt.

Darüber hinaus umfasst die Vorrichtung 1 in bekannter Weise eine Andrückeinheit 20 mit mehreren Andrückrollen zum Andrücken des Beschichtungsmaterials 4 an das Werkstück 2, während es mittels einer in Fig. 1 veranschaulichten Fördereinheit 30 an der Andrückeinheit 20 entlanggeführt wird. Die Fördereinheit 30 ist in der vorliegenden Ausführungsform als Durchlauffördereinheit gezeigt, welche das jeweilige Werkstück von rechts nach links in Fig. 1 in einer Durchlaufrichtung transportiert. Die Fördereinheit 30 kann beispielsweise Förderketten, Förderriemen, Förderbänder oder andere geeignete Fördermittel aufweisen. Alternativ oder zusätzlich kann die Fördereinheit 30 auch dazu dienen, die Andrückeinheit 20 und gegebenenfalls auch die Haftmittelauftragseinheit 10 und weitere Bauteile in Bezug auf ein ruhendes oder in Grenzen bewegbares Werkstück 2 zu bewegen. Auch Mischformen beider Konzepte sind im Rahmen der Erfindung möglich.

Zwischen der Haftmittelauftragseinheit 10 und der Andrückeinheit 20 befindet sich in der vorliegenden Ausführungsform eine Reaktivierungseinheit 50 zum zumindest teilweisen Reaktivieren des aufgetragenen Haftmittels 6. Die Reaktivierung beinhaltet in der vorliegenden Ausführungsform primär eine Wiedererwärmung bzw. ein Warmhalten des aufgetragenen Haftmittels 6, obgleich die Erfindung nicht hierauf beschränkt ist. Zu diesem Zweck kann die Reaktivierungseinheit 50 eine geeignete Energiequelle aufweisen, wie etwa eine Infrarotquelle, eine Laserquelle, eine Mikrowellenquelle, eine Heißgasquelle oder verschiedene andere Energiequellen und Kombinationen hiervon.

Stromaufwärts der Haftmittelauftragseinheit 10 ist in der vorliegenden Ausführungsform noch eine Vorwärmeinheit 80 vorgesehen, die dazu dient, die zu beschichtende Werkstückoberfläche 2' bei Bedarf vorzuwärmen, etwa falls das Werkstück zuvor kühl gelagert wurde. Hierdurch wird ein übermäßiges Abkühlen des auf die Schmalfläche 2' aufgetragenen Haftmittels 6 verhindert. Dabei kann die Vorwärmeinheit 80 einen ähnlichen Aufbau besitzen wie die Reaktivierungseinheit 50.

Darüber hinaus umfasst die Vorrichtung 1 in der vorliegenden Ausführungsform zwei Erfassungseinheiten 40, 60 zum Erfassen mindestens einer Eigenschaft des aufgetragenen Haftmittels 6. Dabei können unterschiedliche Eigenschaften des Haftmittels erfasst werden, wie etwa die Temperatur, die Schichtdicke oder auch die Flächigkeit. Zu diesem Zweck weist die erste Erfassungseinheit 40 in der vorliegenden Ausführungsform eine Digitalkamera, insbesondere Thermobildkamera auf, welche das auf die zu beschichtende Oberfläche 2' des Werkstücks 2 aufgetragene Haftmittel abtastet. Die Kamera ist in der Lage, neben der Temperatur auch die Oberflächenstruktur zu erfassen und beispielsweise Aufschlüsse darüber zu erlauben, ob die gesamte zu beschichtende Oberfläche 2' mit Haftmittel 6 versehen ist und ob der Haftmittelauftrag gleichmäßig ist. Ferner lassen sich auch Rückschlüsse auf die Schichtdicke ziehen, etwa anhand des Abkühlverhaltens des aufgetragenen Haftmittels 6. Dabei tastet die erste Erfassungseinheit 40 das aufgetragene Haftmittel 6 in einem Bereich zwischen der Haftmittelauftragseinheit 10 und der Reaktivierungseinheit 50 ab.

Die zweite Erfassungseinheit 60 weist in der vorliegenden Ausführungsform ein Pyrometer auf, der einen punktförmigen Messstrahl besitzt und somit bei bewegtem Werkstück 3 die Oberfläche 2' des Werkstücks linienförmig abtastet. Die Hauptfunktion des Pyrometers 60 liegt somit darin, die Temperatur des aufgetragenen und gegebenenfalls mittels der Reaktivierungseinheit 50 reaktivierten Haftmittels 6 abschließend zu überprüfen. Um für den Fügevorgang möglichst aussagekräftige Ergebnisse zu erhalten, tastet der Pyrometer dabei einen Bereich unmittelbar stromaufwärts der Andrückeinheit 20 ab, d.h. unmittelbar stromaufwärts des sogenannten Fügepunkts. Hierdurch liefert die zweite Erfassungseinheit 60 besonders aussagekräftige Ergebnisse für die Qualität und Reproduzierbarkeit der Fügeverbindung zwischen Beschichtungsmaterial 4 und Werkstück 2. Gleichzeitig ist der Pyrometer 60 kompakt genug, um in dem engen Fügespalt zwischen Beschichtungsmaterial 4 und Werkstück 2 untergebracht zu werden bzw. eine Abtastung durchzuführen. Demgegenüber kann bei dem Konzept der vorliegenden Erfindung die erste Erfassungseinheit 40, die größere Abmessungen besitzt und bei der auch die Relativpositionierung zur Werkstückoberfläche eine größere Rolle für die Genauigkeit der Erfassungsergebnisse liefert, freier positioniert werden und muss nicht in den engen Fügespalt integriert werden.

Ferner umfasst die Vorrichtung 1 in der vorliegenden Ausführungsform eine Steuereinheit 70 zum Steuern der verschiedenen Einheiten der Vorrichtung, wie insbesondere der Haftmittelauftragseinheit 10, der Reaktivierungseinheit 50, der Vorwärmeinheit 80 und auch der Fördereinheit 30. Zu diesem Zweck ist die Steuereinheit 70 mit diesen Einheiten verbunden, obgleich dies in Fig. 1 nur angedeutet ist. Ferner ist die Steuereinheit 70 auch mit der ersten und der zweiten Erfassungseinheit 40, 60 verbunden und erhält auf diese Weise die jeweiligen Erfassungsergebnisse der mindestens einen Eigenschaft des aufgetragenen Haftmittels 6. Auf dieser Grundlage sowie gegebenenfalls unter Berücksichtigung anderer Parameter, Einflussgrößen und Vorgaben steuert die Steuereinheit 70 die oben genannten Einheiten der Vorrichtung **1.** Dabei kann die Steuereinheit 70 die Erfassungsergebnisse selbst oder hieraus abgeleitete Informationen wie beispielsweise Warnhinweise, Wartungsanforderungen, Reparaturanforderungen oder dergleichen an eine Bedienperson und/oder eine Datenbank ausgeben.

Wegen der Steuereinheit 70 können einerseits Soll-Werte für eine oder mehrere Eigenschaften des aufgetragenen Haftmittels 6 hinterlegt sein, wie etwa eine Soll-Temperatur, eine Soll-Schichtdicke, etc. Ferner können auch Quellwerte oder Bandbreiten hinterlegt sein, bei deren Überschreiten die Steuereinheit 70 bestimmte Maßnahmen einleitet. So kann etwa falls die mindestens eine erfasste Eigenschaft um mehr als einen ersten vorbestimmten Wert von dem jeweiligen, hinterlegten Soll-Wert abweicht, ein geeigneter Steuerbefehl an die Reaktivierungseinheit 50 und/oder die Haftmittelauftragseinheit 10 ausgegeben werden. Falls also beispielsweise eine der von der ersten Erfassungseinheit 40 und der zweiten Erfassungseinheit 60 gemessenen Ist-Temperaturen um mehr als beispielsweise 5°C von der hinterlegten Soll-Temperatur abweicht, steuert die Steuereinheit 70 beispielsweise die Reaktivierungseinheit 50 an, um eine stärkere Reaktivierung des aufgetragenen Haftmittels 6 durchzuführen. Alternativ oder zusätzlich kann die Steuereinheit 70 auch die Haftmittelauftragseinheit 10 ansteuern, um die Erwärmung des Haftmittels durch die Aufschmelzeinheit 6 zu erhöhen und das Haftmittel mit einer größeren Anfangstemperatur auf das Werkstück 2 aufzutragen.

Ferner kann auch der Fall auftreten, dass die vorstehend beschriebenen Maßnahmen nicht ausreichen, um die erfasste Temperatur des Haftmittels 6 ausreichend nahe an dem hinterlegten Soll-Wert zu halten. Falls somit die erfasste Temperatur um mehr als beispielsweise 10°C von dem hinterlegten Soll-Wert abweicht, kann die Steuereinheit 70 weitere Maßnahmen einleiten. Beispielsweise kann die Steuereinheit 70 entsprechende Werkstück als Ausschuss kennzeichnen und ausschleusen. Alternativ oder zusätzlich kann auch eine Warnmeldung an eine Bedienperson und/oder eine Datenbank ausgegeben werden, sodass entsprechende Maßnahmen eingeleitet werden können.

Durch die erfindungsgemäße Ausgestaltung und Vorgehensweise lässt sich eine hohe Qualität der Fügeverbindung zwischen Beschichtungsmaterial 4 und Werkstück 2 sicherstellen und die Reproduzierbarkeit steigern. Gleichzeitig können mögliche Abweichungen im Fügeprozess frühzeitig erkannt und adressiert werden, sodass Betriebsstörungen und Ausschuss von Werkstücken minimiert werden können.

## Patentansprüche

1. Vorrichtung (1) zum Beschichten eines Werkstücks (2), das bevorzugt zumindest abschnittweise aus Holz, Holzwerkstoff, Kunststoff oder dergleichen besteht, mit einem Beschichtungsmaterial (4), umfassend:
eine Haftmittelauftragseinheit (10) zum Auftragen eines Haftmittels (6) auf eine zu beschichtende Oberfläche (2') des Werkstücks (2) und/oder eine Fügefläche (4') des Beschichtungsmaterials (4),
eine Andrückeinheit (20) zum Andrücken des Beschichtungsmaterials (4) an das Werkstück (2), und
eine Fördereinheit (30) zum Herbeiführen einer Relativbewegung zwischen der Andrückeinheit (20) und dem Werkstück (2),
**dadurch gekennzeichnet, dass**
die Vorrichtung eine erste Erfassungseinheit (40) zum Erfassen mindestens einer Eigenschaft des aufgetragenen Haftmittels (6), und
eine Reaktivierungseinheit (50) zum zumindest teilweisen Reaktivieren des aufgetragenen Haftmittels (6) aufweist, wobei
die erste Erfassungseinheit (40) eingerichtet ist, die mindestens eine Eigenschaft des aufgetragenen Haftmittels (6) in einem Bereich zwischen der Haftmittelauftragseinheit (10) und der Reaktivierungseinheit (50) zu erfassen.

2. Vorrichtung nach Anspruch 1, bei der die erste Erfassungseinheit (40) eingerichtet ist, die Temperatur und/oder Schichtdicke des aufgetragenen Haftmittels (6) zu erfassen.

3. Vorrichtung nach Anspruch 1 oder 2, bei der erste Erfassungseinheit (40) eingerichtet ist, die mindestens eine Eigenschaft des aufgetragenen Haftmittels (6) flächig, insbesondere vollflächig, zu erfassen, und bevorzugt eine Kamera aufweist.

4. Vorrichtung nach einem der vorhergehenden Ansprüche, bei der eine zweite Erfassungseinheit (60) zum Erfassen mindestens einer Eigenschaft, insbesondere Temperatur, des aufgetragenen Haftmittels (6) vorgesehen ist.

5. Vorrichtung nach Anspruch 4, bei der die zweite Erfassungseinheit (60) eingerichtet ist, die mindestens eine Eigenschaft des aufgetragenen Haftmittels (6) in einem Bereich zwischen der Reaktivierungseinheit (50) und der Andrückeinheit (20) zu erfassen.

6. Vorrichtung nach Anspruch 4 oder 5, bei der zweite Erfassungseinheit (60) eingerichtet ist, die mindestens eine Eigenschaft punkt- bzw. linienförmig zu erfassen und bevorzugt ein Pyrometer aufweist.

7. Vorrichtung nach einem der vorhergehenden Ansprüche, bei der eine Steuereinheit (70) zum Steuern mindestens einer Einheit vorgesehen ist, die ausgewählt ist aus Haftmittelauftragseinheit (10), Reaktivierungseinheit (50) und Fördereinheit (30).

8. Vorrichtung nach Anspruch 7, bei der die Steuereinheit (70) eingerichtet ist, ein Erfassungsergebnis der ersten und/oder zweiten Erfassungseinheit (40, 60) zu erhalten und auf dieser Grundlage zumindest eine der Einheiten (10, 50, 30) zu steuern.

9. Vorrichtung nach Anspruch 7 oder 8, bei der die Steuereinheit (70) eingerichtet ist, ein Erfassungsergebnis der ersten und/oder zweiten Erfassungseinheit (40, 60) zu erhalten und auf dieser Grundlage eine Information auszugeben, insbesondere an eine Bedienperson und/oder eine Datenbank.

10. Vorrichtung nach einem der vorhergehenden Ansprüche, bei der die Reaktivierungseinheit (50) mindestens eine Energiequelle aufweist, die bevorzugt ausgewählt ist aus Infrarotquelle, Laserquelle, Mikrowellenquelle, Heißgasquelle oder Kombination daraus.

11. Verfahren zum Beschichten eines Werkstücks (2), das bevorzugt zumindest abschnittweise aus Holz, Holzwerkstoff, Kunststoff oder dergleichen besteht, mit einem Beschichtungsmaterial (4), insbesondere unter Einsatz einer Vorrichtung (1) nach einem der vorhergehenden Ansprüche:
Auftragen eines Haftmittels (6) auf eine zu beschichtende Oberfläche (2') des Werkstücks (2) und/oder eine Fügefläche (4') des Beschichtungsmaterials (4),
Erfassen mindestens einer Eigenschaft des aufgetragenen Haftmittels (6),
Vergleichen der mindestens einen erfassten Eigenschaft jeweils mit einem Soll-Wert, und
falls die mindestens eine erfasste Eigenschaft um mehr als einen ersten vorbestimmten Wert von dem jeweiligen Soll-Wert abweicht:
- Reaktivieren des aufgetragenen Haftmittels (6), und/oder
- Anpassen der Eigenschaften des Haftmittels (6) beim Auftragen.

12. Verfahren nach Anspruch 11, bei dem, falls die mindestens eine erfasste Eigenschaft um mehr als einen zweiten vorbestimmten Wert von dem jeweiligen Soll-Wert abweicht:
- das entsprechende Werkstück (2) ausgeschleust wird, und/oder
- eine Information ausgegeben wird, insbesondere an eine Bedienperson und/oder eine Datenbank.

## Claims

1. A device (1) for coating a workpiece (2), which preferably consists at least in sections, of wood, wood-based material, plastic or the like, with a coating material (4), comprising:
an adhesive application unit (10) for applying an adhesive (6) to a surface (2') of the workpiece (2) to be coated and/or a joining surface (4') of the coating material (4),
a pressing unit (20) for pressing the coating material (4) onto the workpiece (2),
and
a conveyor unit (30) for bringing about a relative movement between the pressing unit (20) and the workpiece (2),
**characterised in that**
the device has a first detection unit (40) for detecting at least one property of the applied adhesive (6), and
a reactivation unit (50) for at least partially reactivating the applied adhesive (6),
wherein
the first detection unit (40) is configured to detect the at least one property of the applied adhesive (6) in a region between the adhesive application unit (10) and the reactivation unit (50).

2. The device according to claim 1, in which the first detection unit (40) is configured to detect the temperature and/or layer thickness of the applied adhesive (6).

3. The device according to claim 1 or 2, in which the first detection unit (40) is configured to detect the at least one property of the applied adhesive (6) over a surface, in particular over the entire surface, and preferably has a camera.

4. The device according to any one of the preceding claims, in which a second detection unit (60) is provided for detecting at least one property, in particular temperature, of the applied adhesive (6).

5. The device according to claim 4, in which the second detection unit (60) is configured to detect the at least one property of the applied adhesive (6) in a region between the reactivation unit (50) and the pressing unit (20).

6. The device according to claim 4 or 5, in which the second detection unit (60) is configured to detect the at least one property in the form of a point or line and preferably has a pyrometer.

7. The device according to any one of the preceding claims, in which a control unit (70) is provided for controlling at least one unit, selected from the adhesive application unit (10), the reactivation unit (50) and the conveyor unit (30).

8. The device according to claim 7, in which the control unit (70) is configured to receive a detection result of the first and/or second detection unit (40, 60) and to control at least one of the units (10, 50, 30) on this basis.

9. The device according to claim 7 or 8, in which the control unit (70) is configured to receive a detection result of the first and/or second detection unit (40, 60) and to output information on this basis, in particular to an operator and/or a database.

10. The device according to any one of the preceding claims, in which the reactivation unit (50) has at least one energy source, which is preferably selected from an infrared source, a laser source, a microwave source, a hot gas source, or a combination thereof.

11. A method for coating a workpiece (2), which preferably consists at least in sections of wood, wood-based material, plastic or the like, with a coating material (4), in particular using a device (1) according to any one of the preceding claims:
applying an adhesive (6) to a surface (2') of the workpiece (2) to be coated and/or a joining surface (4') of the coating material (4),
detecting at least one property of the applied adhesive (6),
comparing the at least one detected property with a target value, and
if the at least one detected property deviates from the respective target value by more than a first predetermined value:
- reactivating the applied adhesive (6), and/or
- adjusting the properties of the adhesive (6) during application.

12. The method according to claim 11, in which, if the at least one detected property deviates from the respective target value by more than a second predetermined value:
- the corresponding workpiece (2) is ejected, and/or
- information is output, in particular to an operator and/or a database.

## Revendications

1. Dispositif (1) de revêtement d'une pièce (2), qui, de manière préférée, est constituée au moins en partie de bois, d'un matériau dérivé du bois, de matière plastique ou similaire, avec un matériau de revêtement (4), comprenant :
une unité (10) d'application d'adhésif, pour appliquer un adhésif (6) sur une surface (2') à revêtir de la pièce (2) et/ou une surface d'assemblage (4') du matériau de revêtement (4),
une unité de pressage (20), pour presser le matériau de revêtement (4) contre la pièce (2), et
une unité de transport (30), pour engendrer un déplacement relatif entre l'unité de pressage (20) et la pièce (2),
**caractérisé en ce que**
le dispositif présente une première unité de détection (40), pour détecter au moins une propriété de l'adhésif (6) appliqué, et
une unité de réactivation (50), pour réactiver au moins en partie l'adhésif (6) appliqué, dans lequel
la première unité de détection (40) est conçue pour mesurer au moins une propriété de l'adhésif (6) appliqué dans une zone située entre l'unité (10) d'application d'adhésif et l'unité de réactivation (50).

2. Dispositif selon la revendication 1, dans lequel la première unité de détection (40) est conçue pour mesurer la température et/ou l'épaisseur de couche de l'adhésif (6) appliqué.

3. Dispositif selon la revendication 1 ou la revendication 2, dans lequel la première unité de détection (40) est conçue pour détecter ladite au moins une propriété de l'adhésif (6) appliqué sur la surface, en particulier sur toute la surface, et, de manière préférée, présente une caméra.

4. Dispositif selon l'une quelconque des revendications précédentes, dans lequel une deuxième unité de détection (60) est prévue pour détecter au moins une propriété, en particulier la température, de l'adhésif (6) appliqué.

5. Dispositif selon la revendication 4, dans lequel la deuxième unité de détection (60) est conçue pour détecter au moins une propriété de l'adhésif (6) appliqué dans une zone située entre l'unité de réactivation (50) et l'unité de pressage (20).

6. Dispositif selon la revendication 4 ou la revendication 5, dans lequel la deuxième unité de détection (60) est conçue pour détecter ladite au moins une propriété sous forme de point ou de ligne et, de manière préférée, présente un pyromètre.

7. Dispositif selon l'une quelconque des revendications précédentes, dans lequel une unité de commande (70) est prévue pour commander au moins une unité qui est choisie parmi une unité (10) d'application d'adhésif, une unité (50) de réactivation et une unité (30) de transport.

8. Dispositif selon la revendication 7, dans lequel l'unité de commande (70) est conçue pour recevoir un résultat de détection de la première et/ou de la deuxième unité de détection (40, 60), et pour commander sur cette base au moins une des unités (10, 50, 30).

9. Dispositif selon la revendication 7 ou la revendication 8, dans lequel l'unité de commande (70) est conçue pour recevoir un résultat de détection de la première et/ou de la deuxième unités de détection (40, 60) et pour envoyer sur cette base une information, en particulier à un opérateur et/ou à une base de données.

10. Dispositif selon l'une quelconque des revendications précédentes, dans lequel l'unité de réactivation (50) présente au moins une source d'énergie qui, de manière préférée, est choisie parmi une source infrarouge, une source laser, une source de micro-ondes, une source de gaz chaud ou une combinaison de celles-ci.

11. Procédé de revêtement d'une pièce (2), qui, de manière préférée, est constituée au moins en partie de bois, d'un matériau dérivé du bois, de matière plastique ou similaire, avec un matériau de revêtement (4), en particulier en utilisant un dispositif (1) selon l'une quelconque des revendications précédentes, comprenant :
l'application d'un adhésif (6) sur une surface (2') à revêtir de la pièce (2) et/ou une surface d'assemblage (4') du matériau de revêtement (4),
la détection d'au moins une propriété de l'adhésif (6) appliqué,
la comparaison de ladite au moins une propriété détectée respectivement à une valeur de consigne, et,
si ladite au moins une caractéristique détectée diffère de la valeur de consigne respective de plus d'une première valeur prédéfinie :
- la réactivation de l'adhésif (6) appliqué, et/ou
- l'adaptation des propriétés de l'adhésif (6) lors de l'application.

12. Procédé selon la revendication 11, dans lequel, si ladite au moins une propriété détectée diffère de la valeur de consigne respective de plus d'une deuxième valeur prédéfinie :
- la pièce (2) correspondante est évacuée, et/ou
- une information est envoyée, en particulier à un opérateur et/ou à une base de données.
